(19) **Europäisches Patentamt / European Patent Office / Office européen des brevets**

(11) **EP 1 861 722 B1**

(12) **EUROPÄISCHE PATENTSCHRIFT**

(45) Veröffentlichungstag und Bekanntmachung des Hinweises auf die Patenterteilung:
**01.10.2008 Patentblatt 2008/40**

(21) Anmeldenummer: 06706770.2

(22) Anmeldetag: **09.02.2006**

(51) Int Cl.:
*G01P 3/68* (2006.01)     *G05D 1/02* (2006.01)
*B60W 40/10* (2006.01)     *G06T 7/20* (2006.01)
*G01S 11/12* (2006.01)     *E01F 9/08* (2006.01)

(86) Internationale Anmeldenummer:
**PCT/EP2006/001131**

(87) Internationale Veröffentlichungsnummer:
**WO 2006/099916 (28.09.2006 Gazette 2006/39)**

(54) **SPURERKENNUNGSSYSTEM UND VERFAHREN**

LANE DETECTION SYSTEM AND METHOD

SYSTEME ET PROCEDE DE RECONNAISSANCE DE VOIES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.03.2005 DE 102005014114**

(43) Veröffentlichungstag der Anmeldung:
**05.12.2007 Patentblatt 2007/49**

(73) Patentinhaber: **Valeo Schalter und Sensoren GmbH**
**74321 Bietigheim-Bissingen (DE)**

(72) Erfinder:
• **MAURER, Cornelia**
**74354 Besigheim (DE)**

• **GOTZIG, Heinrich**
**74081 Heilbronn (DE)**

(74) Vertreter: **Bulling, Alexander**
**Dreiss, Fuhlendorf, Steimle & Becker**
**Patentanwälte**
**Postfach 10 37 62**
**70032 Stuttgart (DE)**

(56) Entgegenhaltungen:
**DE-A1- 10 238 215**

• **PATENT ABSTRACTS OF JAPAN Bd. 1996, Nr. 08, 30. August 1996 (1996-08-30) -& JP 08 094380 A (SUMITOMO ELECTRIC IND LTD), 12. April 1996 (1996-04-12)**

EP 1 861 722 B1

**Beschreibung**

Die Erfindung betrifft ein Spurerkennungssystem für ein Fahrzeug, mit einer Kamera zur Erfassung der vor dem Fahrzeug liegenden Fahrbahnmarkierungen und einer Auswerteeinheit zur Auswertung der von der Kamera erfassten Daten.

Derartige Spurerkennungssysteme sind in vielfältiger Art und Weise bekannt und werden häufig auch als Lane Departure Warning Systems oder als Spurwechselwarnsysteme bezeichnet. Derartige Systeme detektieren insbesondere die die Fahrbahn begrenzenden Linien und warnen den Fahrzeuglenker vor einem unbeabsichtigten Verlassen der Fahrbahn. Ein unbeabsichtigtes Verlassen der Fahrbahn kann beispielsweise bei Unachtsamkeit des Fahrzeuglenkers oder bei starker Müdigkeit bzw. Schlaf des Fahrzeuglenkers auftreten. Die bekannten Systeme sollen dabei erst ab einer gewissen Geschwindigkeit aktiv werden. Zudem kann die Fahrzeuggeschwindigkeit zur Einstellung der Systemempfindlichkeit herangezogen werden. Bei bekannten Fahrzeugen wird die Fahrzeuggeschwindigkeit von anderen Fahrzeugsystemen bestimmt und dem Spurerkennungssystem mitgeteilt, beispielsweise über einen CAN-Bus. Deshalb ist ein Nachrüsten von Spurerkennungssystemen in Fahrzeuge mit einem nicht unerheblichen Aufwand verbunden.

Aus der DE-A-102 38 215 ist z.B. ein Spurerkennungssystem mit Kamera zur Erfassung von Fahrbahnmarkierungen und eine Einheit zur Auswertung der Kameradaten bekannt. Dieses System bedarf eines Geschwindigkeitsaufnehmers. Die JP-A-08 094 380 zeigt eine Vorrichtung, die auf einen externen Geschwindigkeitsaufnehmer verzichtet. Eine Ausführungsvariante sieht vor, dass von der Kenntnis eines Typs von standardisierten Fahrbahnmarkierungen Gebrauch gemacht wird. Es kann aber nicht zwischen unterschiedlichen Typen von Fahrbahnmarkierungen unterschieden werden.

Der vorliegenden Erfindung liegt die Aufgabe zugrunde, ein Spurerkennungssystem der eingangs genannten Art derart weiterzubilden, dass ein Nachrüsten des Systems vereinfacht wird.

Diese Aufgabe wird durch ein Spurerkennungssystem gelöst, das die Merkmale des Anspruchs 1 aufweist.

Erfindungsgemäß sind folglich Fahrbahnmarkierungen hinterlegt, wobei für Markierungen von Straßen sowie für die Anlage von Straßen Richtlinien bestehen (insbesondere Empfehlungen für die Anlage von Erschließungsstraßen EAE 85/95; Richtlinien für die Markierung von Straßen RMS; Richtlinien für die Anlage von Straßen RAS). Die Geometriedaten der Fahrbahnmarkierungen sind folglich geregelt und vorbekannt. Dabei können je nach Fahrbahn unterschiedliche Typen von Fahrbahnmarkierungen Verwendung finden; Autobahnen, Bundesstraßen, Landstraßen sowie innerörtliche Straßen weisen teilweise unterschiedliche Geometriedaten auf. Insbesondere die Länge, Breite und der Abstand von unterbrochenen Mittelstreifen können verschieden sein. Durch insbesondere die Kenntnis der Länge, der Breite und/oder des Abstands von Fahrbahnmarkierungen kann die Auswerteeinheit mit von der Kamera erfassten zeitlichen Änderungen die Fahrzeuggeschwindigkeit bestimmen.

Insgesamt hat die Erfindung den Vorteil, dass das Spurerkennungssystem unabhängig von anderen Fahrzeugsystemen betreibbar ist. Insbesondere benötigt es keinen Geschwindigkeitsinput.

Bei den Fahrbahnmarkierungen kann es sich insbesondere um Fahrbahnlinien wie beispielsweise unterbrochene Mittelstreifen handeln, wobei aus dem bestimmten Typ der erfassten Fahrbahnmarkierungen die Länge einer unterbrochenen Mittellinie und/oder der Abstand zwischen zwei benachbarten Mittelstreifen bekannt ist. Aus der bekannten Länge beziehungsweise dem bekannten Abstand und der für diese Länge beziehungsweise diesen Abstand zurückgelegten Zeit kann die Fahrzeuggeschwindigkeit bestimmt werden.

Insbesondere kann dabei als zeitliche Änderung die verstrichene Zeit zwischen einem ersten Zeitpunkt, an dem von der Kamera der Beginn beziehungsweise das Ende eines unterbrochenen Mittelstreifens erfasst wird, und einem zweiten Zeitpunkt, an dem das Ende beziehungsweise der Beginn des gleichen oder eines anderen Mittelstreifens erfasst wird, herangezogen werden. Wie bereits erwähnt, kann aus der bekannten Länge des Mittelstreifens, des Abstandes zwischen zwei Mittelstreifen und/oder mehrerer Mittelstreifen, sowie der erfassten zeitlichen Änderung auf die Geschwindigkeit des Fahrzeugs rückgeschlossen werden.

Dabei ist vorteilhaft, wenn die beiden Zeitpunkte in definierten Bildebenen der Kamera bestimmt werden. Bei den definierten Bildebenen kann es sich um verschiedene Bildebenen handeln, wobei dann der Abstand der beiden Bildebenen mit zu berücksichtigen ist. Allerdings ist ebenfalls denkbar, dass die beiden Zeitpunkte in der gleichen Bildebene der Kamera bestimmt werden. Beispielsweise kann das Eintreten des Beginns des Mittellängsstreifens in den Detektionsbereich der Kamera als ersten Zeitpunkt und das Eintreten des Endes des gleichen Mittellängsstreifens in den Detektionsbereich der Kamera als zweiten Zeitpunkt bestimmt werden. Die zwischen den beiden Zeitpunkten verstrichene Zeit sowie die bekannte Länge des Mittellängsstreifens wird dann zur Bestimmung der Fahrzeuggeschwindigkeit herangezogen.

Der Typ der Fahrbahnmarkierungen kann insbesondere aus der Breite der Mittelstreifen und/oder den Abständen der unterbrochenen Mittelstreifen und/oder dem Verhältnis der Länge der unterbrochenen Mittelstreifen zu den Abständen zwischen zwei unterbrochenen Mittelstreifen und/oder aus der Breite der Fahrbahnrandlinien bestimmt werden. Wie bereits erwähnt, weisen verschiedene Typen von Fahrbahnmarkierungen, je nachdem um welche Art von Straße es sich handelt, verschiedene Geometriedaten auf.

Insbesondere kann vorteilhaft sein, wenn die Auswerteeinheit zur Bestimmung der Fahrzeuggeschwindigkeit eine Mittelung über mehrere unterbrochene Mittelstreifen und/oder über mehrere Abstände zwischen mehreren unterbrochenen Mittelstreifen vornimmt. Hierdurch kann die Fahrzeuggeschwindigkeit mittels einer höheren Genauigkeit bestimmt werden.

Erfindungsgemäß ist ebenfalls vorteilhaft, wenn das System bei Überschreiten einer Grenzgeschwindigkeit Warnsignale bei einem unbeabsichtigten Verlassen der Fahrspur gibt. Wie bereits eingangs erwähnt, arbeiten Spurerkennungssysteme normalerweise erst ab einer bestimmten Grenzgeschwindigkeit. Überschreitet die momentan gemessene Fahrzeuggeschwindigkeit die Grenzgeschwindigkeit, wird das System im Hinblick auf die Ausgabe von Warnsignale aktiviert.

Das erfindungsgemäße System hat vorteilhafterweise lediglich Anschlüsse für eine externe Stromversorgung und arbeitet sonst autark von anderen Fahrzeugsystemen. Hierdurch kann das erfindungsgemäße Spurerkennungssystem in bereits bestehende Fahrzeuge mit vergleichsweise geringem Aufwand nachgerüstet werden. Aufgrund der autarken Bestimmung der Fahrzeuggeschwindigkeit kann auf den Anschluss an andere Fahrzeugsysteme, insbesondere auf einen CAN-Bus verzichtet werden.

Die eingangs genannte Aufgabe wird außerdem mit einem Verfahren gelöst, das die Merkmale des Anspruchs 10 aufweist.

Das erfindungsgemäße Verfahren ist insbesondere zum Betreiben eines erfindungsgemäßen Spurerkennungssystems geeignet.

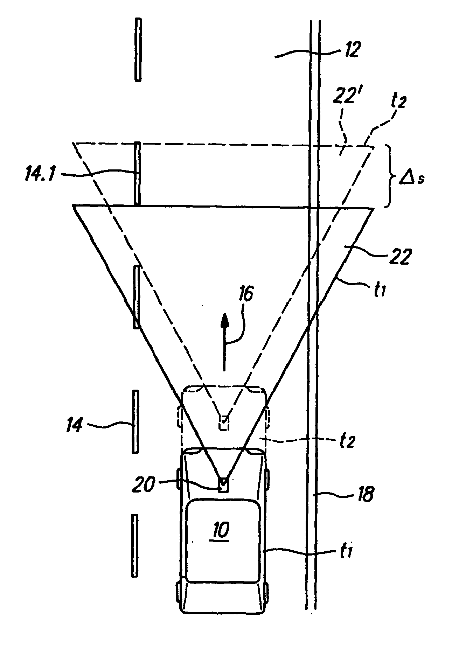

Weitere Vorteile und vorteilhafte Ausgestaltungen sind der folgenden Beschreibung zu entnehmen, in der die Erfindung anhand des in der Figur dargestellten Ausführungsbeispiels näher beschrieben und erläutert ist.

In der Figur ist ein Fahrzeug 10 in Draufsicht auf einer Fahrbahn 12 dargestellt. Die Fahrbahn 12 weist eine unterbrochene Mittellinie 14 auf sowie eine in Fahrtrichtung 16 den rechten Rand der Fahrbahn 12 begrenzende Fahrbahnrandlinie 18. Das Fahrzeug 10 ist insgesamt in zwei Zeitpunkten $t_1$ und $t_2$ dargestellt, wobei das Fahrzeug im Zeitpunkt $t_1$ durchgezogen abgebildet ist und im Zeitpunkt $t_2$ gestrichelt angedeutet ist. Das Fahrzeug 10 weist ein erfindungsgemäßes Spurerkennungssystem 20 auf, dass eine Kamera sowie eine Auswerteeinheit umfasst. Die Kamera nimmt dabei die vor dem Fahrzeug liegenden Fahrbahnmarkierungen auf. Der Detektionsbereich der Kamera ist mit dem Bezugszeichen 22 zum Zeitpunkt $t_1$ und 22' zum Zeitpunkt $t_2$ angedeutet.

Im Spurerkennungssystem sind Geometriedaten bekannter Typen von Fahrbahnmarkierungen hinterlegt. Aufgrund der von der Kamera erfassten Mittellinie 14 und/oder der von der Kamera erfassten Randlinie 18 kann auf den Typ der Fahrbahnlinien der Fahrbahn, auf der sich das Fahrzeug momentan befindet, rückgeschlossen werden. Aufgrund des dann bekannten Typs und der dann bekannten Geometriedaten der Fahrbahnmarkierungen ist die Länge der einzelnen Mittelstreifen 14.1 sowie der Abstand zweier benachbarter Mittelstreifen bekannt.

Zur Bestimmung der Fahrzeuggeschwindigkeit werden von der Kamera erfasste zeitliche Änderungen der einzelnen Mittelstreifen bestimmt. Gemäß der Figur tritt zum Zeitpunkt $t_1$ der Mittelstreifen 14.1 in den Detektionsbereich 22 des Spurerkennungssystems 20. Aufgrund der Vorwärtsbewegung des Fahrzeugs wird das Ende des Mittelstreifens 14.1 zum Zeitpunkt $t_2$ detektiert. Der zurückgelegte Weg $\Delta s$ entspricht dabei der bekannten Länge des Mittelstreifens 14.1. Aufgrund der verstrichenen Zeit $\Delta t = t_2 - t_1$ und dem zurückgelegten Weg $\Delta s$ kann die Fahrzeuggeschwindigkeit v wie folgt bestimmt werden:

$$v = \Delta s \; / \; \Delta t.$$

Mit dem erfindungsgemäßen Spurerkennungssystem 20 kann folglich die Fahrzeuggeschwindigkeit unabhängig und autark von anderen Fahrzeugsystemen bestimmt werden.

Bei dem in der Figur dargestellten System werden die beiden Zeitpunkte $t_1$ und $t_2$ in der gleichen Bildebene bestimmt, nämlich dann, wenn der Mittelstreifen 14.1 in den Detektionsbereich 22 eintritt beziehungsweise austritt. Erfindungsgemäß können die Zeitpunkte $t_1$ und $t_2$ in einer anderen Bildebene oder auch in unterschiedlichen Bildebenen des Detektionsbereichs 22 bestimmt werden.

Um eine höhere Genauigkeit der Fahrzeuggeschwindigkeit zu erhalten, kann vorteilhafterweise eine Mittelung über mehrere unterbrochene Mittelstreifen und/oder über mehrere Abstände zwischen mehreren unterbrochenen Mittelstreifen erfolgen. Anstelle der Detektion des Beginns und des Endes des Mittelstreifens 14 können auch die Abstände zwischen zwei benachbarten Mittelstreifen und/oder die Abstände zwischen mehreren Mittelstreifen herangezogen werden.

Das Spurerkennungssystem überwacht zudem bei Überschreiten einer Grenzgeschwindigkeit, ob ein unbeabsichtigtes Verlassen der Fahrspur vorliegt. Liegt ein solches unbeabsichtigtes Verlassen der Fahrspur vor, wird ein Warnsignal gegeben. Aufgrund der mit dem erfindungsgemäßen Spurerkennungssystem bestimmten Geschwindigkeit und einem Vergleich dieser Geschwindigkeit mit der vorgegebenen Grenzgeschwindigkeit kann das Spurerkennungssystem aktiviert werden. Zudem kann die Empfindlichkeit des Spurerkennungssystems in Abhängigkeit von der tatsächlich festgestellten Geschwindigkeit des Spurerkennungssystems seine Empfindlichkeit ändern.

**Patentansprüche**

1. Spurerkennungssystem (20) für ein Fahrzeug, mit einer Kamera zur Erfassung der vor dem Fahrzeug liegenden Fahrbahnmarkierungen (14, 18) und einer Auswerteeinheit zur Auswertung der von der Kamera erfassten Daten, **dadurch gekennzeichnet, dass** in der Auswerteeinheit

   - Mittel zum Hinterlegen von Geometriedaten bekannter Typen von Fahrbahnmarkierungen,
   - Mittel zur Bestimmung des Typs der erfassten Fahrbahnmarkierungen durch Vergleich der erfassten mit den hinterlegten Fahrbahnmarkierungen, und
   - Mittel zum Bestimmen der Fahrzeuggeschwindigkeit (v) aus den bekannten Geometriedaten ($\Delta$s) der erfassten Fahrbahnmarkierungen und deren von der Kamera erfassten zeitlichen Änderungen ($\Delta$t) vorgesehen sind.

2. Spurerkennungssystem (20) nach Anspruch 1, **dadurch gekennzeichnet, dass** Mittel zur Hinterlegung von Daten von Fahrbahnmarkierungen in Form von unterbrochenen Mittellinien (14) vorgesehen sind, wobei mit den Mitteln aus dem bestimmten Typ der erfassten Fahrbahnmarkierungen als Geometriedaten ($\Delta$s) die Länge eines unterbrochenen Mittelstreifens (14.1) und/oder der Abstand zwischen zwei benachbarten Mittelstreifen bestimmbar ist.

3. Spurerkennungssystem (20) nach Anspruch 1 oder 2, **dadurch gekennzeichnet, dass** Mittel vorgesehen sind, mit denen als zeitliche Änderung ($\Delta$t) die verstrichene Zeit zwischen einem ersten Zeitpunkt ($t_1$), an dem von der Kamera der Beginn bzw. das Ende eines unterbrochenen Mittelstreifens (14.1) erfasst wird und einem zweiten Zeitpunkt ($t_2$), an dem das Ende bzw. der Beginn des gleichen oder eines anderen Mittelstreifens (14.1) erfasst wird, heranziehbar ist.

4. Spurerkennungssystem (20) nach Anspruch 3, **dadurch gekennzeichnet, dass** Mittel zum Bestimmen der beiden Zeitpunkte ($t_1$, $t_2$) in definierten Bildebenen der Kamera vorgesehen sind.

5. Spurerkennungssystem (20) nach Anspruch 3 oder 4, **dadurch gekennzeichnet, dass** Mittel zum Bestimmen der beiden Zeitpunkte ($t_1$, $t_2$) in der gleichen Bildebene der Kamera vorgesehen sind.

6. Spurerkennungssystem (20) nach einem der vorhergehenden Ansprüche, **dadurch gekennzeichnet, dass** Mittel zum Bestimmen des Typs der Fahrbahnmarkierungen aus der Breite der Mittelstreifen (14) und/oder den Abständen von unterbrochenen Mittelstreifen (14) und/oder dem Verhältnis der Länge der unterbrochenen Mittelstreifen (14) zu den Abständen zwischen zwei unterbrochenen Mittelstreifen (14) und/oder aus der Breite der ' Fahrbahnrandlinie (18) vorgesehen sind.

7. Spurerkennungssystem (20) nach einem der vorhergehenden Ansprüche, **dadurch gekennzeichnet, dass** in der Auswerteeinheit Mittel zur Bestimmung der Fahrzeuggeschwindigkeit durch eine Mittelung über mehrere unterbrochene Mittelstreifen und/oder über mehrere Abstände zwischen mehreren unterbrochenen Mittelstreifen vorgesehen sind.

8. Spurerkennungssystem (20) nach einem der vorhergehenden Ansprüche, **dadurch gekennzeichnet, dass** Mittel zur Abgabe von Warnsignalen bei Überschreiten einer Grenzgeschwindigkeit bei einem unbeabsichtigten Verlassen der Fahrspur vorgesehen sind.

9. Spurerkennungssystem (20) nach einem der vorhergehenden Ansprüche, **dadurch gekennzeichnet, dass** das System lediglich Anschlussmittel für eine externe Stromversorgung aufweist und sonst autark von anderen Fahrzeugsystem betreibbar ist.

10. Verfahren zum Betreiben eines Spurerkennungssystem (20) für ein Fahrzeug, mit dem die vor dem Fahrzeug liegenden Fahrbahnmarkierungen (14, 18) erfasst und ausgewertet werden, wobei die Fahrzeuggeschwindigkeit (v) wie folgt bestimmt wird:

    - Bestimmen des Typs der erfassten Fahrbahnmarkierungen durch Vergleichen der erfassten Fahrbahnmarkierungen mit hinterlegten Typen von Fahrbahnmarkierungen, und
    - Bestimmen der Fahrzeuggeschwindigkeit aus den bekannten Geometriedaten der erfassten Fahrbahnmarkierungen und deren gemessenen zeitlichen Änderungen.

11. Verfahren nach Anspruch 10 zum Bereiben eines Spurerkennungssystems nach einem der Ansprüche 1 bis 9.

**Claims**

1. Lane recognition system (20) for a vehicle, with a camera to register the lane markings (14, 18) in front of the vehicle and an evaluation unit to evaluate the data registered by the camera, **characterised in that** the evaluation unit is provided with

    - means for storing geometrical data of known types of lane markings,
    - means for determining the type of the registered lane markings through comparison of the registered lane markings with the stored lane markings and
- means for determining the speed of the vehicle (v) from the known geometrical data ($\Delta_s$) of the registered lane markings and their changes over time ($\Delta t$) as registered by the camera.

2. Lane recognition system (20) according to claim 1, **characterised in that** means are provided for storing data of lane markings in the form of broken centre lines (14), whereby said means can determine the length of a broken centre line (14.1) and/or the distance between two adjacent centre lines from the identified type of the registered lane markings, as geometrical data ($\Delta_s$).

3. Lane recognition system (20) according to claim 1 or 2, **characterised in that** means are provided with which the time which elapses between a first point in time ($t_1$) at which the start or end of a broken centre line (14.1) is registered by the camera and a second point in time ($t_2$) at which the end or start of the same, or a different, centre line (14.1) is registered can be referred to as a change over time ($\Delta t$).

4. Lane recognition system (20) according to claim 3, **characterised in that** means for determining the two points in time ($t_1$, $t_2$) are provided in defined image planes of the camera.

5. Lane recognition system (20) according to claim 3 or 4, **characterised in that** means for determining the two points in time ($t_1$, $t_2$) are provided in the same image plane of the camera.

6. Lane recognition system (20) according to one of the preceding claims, **characterised in that** means are provided for determining the type of the lane markings from the width of the centre line (14) and/or the distances between broken centre lines (14) and/or the ratio between the length of the broken centre line (14) and the distances between two broken centre lines (14) and/or from the width of the line (18) marking the edge of the carriageway.

7. Lane recognition system (20) according to one of the preceding claims, **characterised in that** the evaluation unit is provided with means for determining the speed of the vehicle by calculating an average over several broken centre lines and/or several gaps between several broken centre lines.

8. Lane recognition system (20) according to one of the preceding claims, **characterised in that** means are provided for generating warning signals when a speed limit is exceeded when unintentionally leaving the lane.

9. Lane recognition system (20) according to one of the preceding claims, **characterised in that** the system only possesses connections for an external power supply and can otherwise be operated independently of other vehicles systems.

10. Method for operating a lane recognition system (20) for a vehicle, with which the lane markings (14, 18) in front of the vehicle are registered and evaluated, wherein the speed of the vehicle (v) is determined as follows:

- the type of the registered lane markings is determined through comparison of the registered lane markings with the stored types of lane markings and
- the speed of the vehicle is determined from the known geometrical data of the registered lane markings and their measured changes over time.

11. Method according to claim 10 for operating a lane recognition system according to one of the claims 1 to 9.

**Revendications**

1. Système de reconnaissance de voie (20) pour un véhicule, comprenant une caméra pour détecter des marquages au sol (14, 18) se trouvant devant le véhicule et une unité d'évaluation pour évaluer les données détectées par la caméra, **caractérisé en ce que** dans l'unité d'évaluation

- des moyens pour mémoriser des données géométriques de types connus de marquages au sol,
- des moyens pour déterminer le type des marquages au sol détectés en comparant les marquages au sol détectés à ceux mémorisés, et
- des moyens pour déterminer la vitesse de véhicule (v) à partir des données géométriques ($\Delta s$) connues des marquages au sol détectés et de leurs modifications temporelles ($\Delta t$) détectées par la caméra, sont prévus.

2. Système de reconnaissance de voie (20) selon la revendication 1, **caractérisé en ce que** des moyens pour mémoriser des données de marquages au sol sous la forme de bandes centrales discontinues (14) sont prévus, dans lequel les moyens permettent de déterminer à partir du type déterminé des marquages au sol détectés en tant que données géométriques ($\Delta s$) la longueur d'une bande centrale discontinue (14.1) et/ou la distance entre deux bandes centrales adjacentes.

**3.** Système de reconnaissance de voie (20) selon la revendication 1 ou 2, **caractérisé en ce que** des moyens sont prévus qui permettent d'utiliser en tant que modification temporelle ($\Delta t$) le temps écoulé entre un premier instant ($t_1$), auquel le début ou la fin d'une bande centrale discontinue (14.1) est détecté (e), et un deuxième instant ($t_2$), auquel la fin ou le début de la même bande centrale discontinue (14.1) ou d'une autre est détecté(e).

**4.** Système de reconnaissance de voie (20) selon la revendication 3, **caractérisé en ce que** des moyens sont prévus pour déterminer les deux instants ($t_1$, $t_2$) sur des plans d'image définis de la caméra.

**5.** Système de reconnaissance de voie (20) selon la revendication 3 ou 4, **caractérisé en ce que** des moyens sont prévus pour déterminer les deux instants ($t_1$, $t_2$) dans le même plan d'image de la caméra.

**6.** Système de reconnaissance de voie (20) selon l'une quelconque des revendications précédentes, **caractérisé en ce que** des moyens sont prévus pour déterminer le type des marquages au sol à partir de la largeur de la bande centrale (14) et/ou des distances entre les bandes centrales discontinues (14) et/ou du rapport entre la longueur des bandes centrales discontinues (14) et les distances entre deux bandes centrales discontinues (14) et/ou à partir de la largeur de la ligne de bord de chaussée (18).

**7.** Système de reconnaissance de voie (20) selon l'une quelconque des revendications précédentes, **caractérisé en ce que** dans l'unité d'évaluation, des moyens sont prévus pour déterminer la vitesse de véhicule par un calcul de moyenne sur plusieurs bandes centrales discontinues et/ou sur plusieurs distances entre plusieurs bandes centrales discontinues.

**8.** Système de reconnaissance de voie (20) selon l'une quelconque des revendications précédentes, **caractérisé en ce que** des moyens sont prévus pour délivrer des signaux d'avertissement en cas de dépassement d'une vitesse limite en cas de sortie involontaire de la voie de circulation.

**9.** Système de reconnaissance de voie (20) selon l'une quelconque des revendications précédentes, **caractérisé en ce que** le système présente seulement des moyens de connexion pour une alimentation électrique externe et est par ailleurs exploitable de façon autonome par rapport à d'autres systèmes de véhicule.

**10.** Procédé d'exploitation d'un système de reconnaissance de voie (20) pour un véhicule, qui détecte et évalue les marquages au sol (14, 18) se trouvant devant le véhicule, dans lequel la vitesse de véhicule (v) est déterminée par les étapes consistant à :

- déterminer le type des marquages au sol détectés en comparant les marquages au sol détectés à des types mémorisés de marquages au sol, et
- déterminer la vitesse de véhicule à partir des données géométriques connues des marquages au sol détectés et de leurs modifications temporelles mesurées.

**11.** Procédé selon la revendication 10 pour exploiter un système de reconnaissance de voie selon l'une quelconque des revendications 1 à 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10238215 A
- JP 08094380 A